(19) Europäisches Patentamt
European Patent Office
Office européen des brevets

(11) **EP 1 242 231 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(21) Anmeldenummer: **00954667.2**

(22) Anmeldetag: **30.08.2000**

(51) Int Cl.:
*B29C 70/46* (2006.01)     *C08J 5/24* (2006.01)
*B29C 70/10* (2006.01)     *B29C 70/18* (2006.01)
*B29C 70/20* (2006.01)

(86) Internationale Anmeldenummer:
**PCT/EP2000/008427**

(87) Internationale Veröffentlichungsnummer:
**WO 2001/019599 (22.03.2001 Gazette 2001/12)**

(54) **VERFAHREN ZUR HERSTELLUNG VON MULTIAXIAL VERSTÄRKTEN BAUTEILEN AUS UD-FASERVERSTÄRKTEM SMC**

METHOD OF FABRICATION OF MULTI-AXIALLY REINFORCED COMPONENTS MADE OF UD FIBRE REINFORCED SMC

MÉTHODE DE FABRICATION DE COMPOSANTS RENFORCÉS MULTI-AXIAUX COMPOSÉS DE PREIMPREGNES RENFORCES PAR DES FIBRES UNIDIRECTIONELLES

(84) Benannte Vertragsstaaten:
**AT BE CH CY DE DK ES FI FR GB GR IE IT LI LU MC NL PT SE**

(30) Priorität: **11.09.1999 DE 19943442**
**13.10.1999 DE 19949318**

(43) Veröffentlichungstag der Anmeldung:
**25.09.2002 Patentblatt 2002/39**

(73) Patentinhaber: **Menzolit-Fibron GmbH**
**75015 Bretten (DE)**

(72) Erfinder:
• **EHNERT, Gerd**
**D-76694 Forst (DE)**
• **BIENIEK, Klaus**
**D-75438 Knittlingen-Hohenklingen (DE)**

• **ILZHOEFER, Karl-Heinz, Dipl.-Ing.**
**73230 Kirchheim/Teck (DE)**
• **STIEG, Jürgen**
**38553 Wasbüttel (DE)**

(74) Vertreter: **Scherzberg, Andreas Hans**
**c/o Chemetall GmbH**
**Patente, Marken & Lizenzen**
**Trakehner Strasse 3**
**60487 Frankfurt am Main (DE)**

(56) Entgegenhaltungen:
EP-A- 0 062 973     DE-A- 19 534 627
FR-A- 1 411 011     FR-A- 2 266 595
US-A- 3 183 142     US-A- 4 141 929
US-A- 4 532 169

## Beschreibung

Die Erfindung betrifft ein Verfahren zur Herstellung faserverstärkter duroplastischer Bauteile.

SMC steht für "Sheet Moulding Compound" und ist die englische Bezeichnung für eine Harzmatte nach DIN 16913. Mit SMC wird im allgemeinen eine fließfähige Harzmatte basierend auf ungesättigtem Polyesterharz oder Vinylesterharz und Wirrfaserverteilung in der Mattenebene bezeichnet. Als Verstärkungsfasern werden üblicherweise Glasfasern verwendet. Eine typische SMC-Rezeptur besteht zu ca. 30 % aus Polymer, ca. 30 % aus Füllstoff und ca. 30 % Glasfasern, der Rest setzt sich aus Zuschlagstoffen zusammen, wie zum Beispiel Farbpigmenten, Härter, Dispergierhilfsmittel, Füllstoffen und ähnlichen Stoffen. Hergestellt wird SMC in der Regel folgendermaßen: Die Harzmatrix wird auf zwei Trägerfolien aufgetragen. Diese Trägerfolien werden durch eine SMC-Maschine gezogen und transportieren dabei die Harzmatrix, auf welche die Verstärkungsfasern aufgerieselt oder aufgelegt werden. Nachdem die Verstärkungsfasern aufgebracht sind, werden beide Folien zusammengepreßt, so daß eine Art Sandwich entsteht. Dieses Sandwich wird durch eine Imprägnierstrecke transportiert, die durch Druck- und Walkbewegungen dafür sorgt, daß die Fasern gleichmäßig mit der Harzmatrix benetzt werden. Am Ende der Maschine wird es auf Rollen gewickelt. Von entscheidender Bedeutung ist ein Reifeprozeß, der auf chemische und/oder physikalische Weise eingeleitet werden kann. Nach diesem Reifeprozeß kann das SMC weiterverarbeitet werden. Nach Abziehen der Trägerfolien wird das SMC üblicherweise in beheizten Stahlwerkzeugen zu Formteilen verarbeitet bzw. verpreßt.

Der Vorteil von SMC ist die hohe Fließfähigkeit die bewirkt, daß die Pressform nur zu 30 bis 50 % abgedeckt werden muß. Die Festigkeit und Steifigkeit kann je nach Verstärkungsfaseranteil in einem weiten Spektrum variiert werden.

Als Alternative ist es bekannt, ein Gewebe zur Verstärkung in die Harzmatrix einzulegen. Nachteilig ist hieran, daß zwar die Festigkeit wesentlich erhöht ist, jedoch kaum Fließfähigkeit vorhanden ist. Die Pressform muß vollständig bedeckt werden, was einen exakten Zuschnitt erfordert, wodurch viel Abfall anfällt.

Weiterhin ist SMC mit einer Glasfaserverstärkung sowohl aus geschnittenen Fasern (Wirrfasern) als auch aus unidirektionalen Fasern (UD-Fasern) bekannt. Die UD-Fasern bewirken erhöhte Festigkeits- und Steifigkeitseigenschaften in einer axialen Richtung und die Wirrfasern bestimmen die Querfestigkeit. Vorzugsweise wird dieses SMC nur für trägerartige Bauteile wie zum Beispiel Stoßfängerträger eingesetzt. Flächenförmige Bauteile sind wegen der starken Verzugsneigung der Bauteile nicht herstellbar.

Ein solches Verfahren ist aus der Druckschrift US 3,138,142 bekannt.

Der Erfindung liegt die Aufgabe zu Grunde, ein SMC zur Herstellung faserverstärkter duroplastischer Bauteile so weiterzubilden, daß die Streifen für die Bauteilherstellung abgelängt und in beliebiger Lage verschoben werden und die einzelnen Zuschnittslagen auf einem Drehteller in beliebiger Winkellage zueinander zu einem Stapel geschichtet werden. Dies hat den Vorteil, daß auch bei geometrisch schwierigen Zuschnittsformen kein Abfall anfällt.

Mehrere Lagen SMC mit UD-Fasern mit voneinander verschiedener axialen Ausrichtung im Bauteil angeordnet sind. Da die UD-Fasern für die Festigkeits- und Steifigkeitseigenschaften maßgeblich sind, sind diese Eigenschaften nicht nur in einer axialen Richtung, sondern in verschiedenen Richtungen gegeben. Aufgrund der hohen Festigkeit und Steifigkeit können leichte bzw. Bauteile mit dünner Wandstruktur hergestellt werden.

Um einen mehrlagigen SMC-Aufbau bei angestrebten Bauteilwanddicken von ca. 1,2 mm und großen SMC-Zuschnittsabmessungen herstellen zu können, muß das SMC-Flächengewicht kleiner 1000 gr/m$^2$ sein.

Solch niedrige SMC-Flächengewichte waren bisher technisch nicht herstellbar und aus Festigkeits- und Steifigkeitsgesichtspunkten auch nicht sinnvoll. Erst mit einer UD-Kohlenstoffaserverstärkung und den daraus resultierenden Festigkeits- und Steifigkeitseigenschaften für eine multiaxiale Verstärkung im Bauteil, wurde die Entwicklung eines solchen SMC interessant.

Im Vergleich zu den üblichen Verfahrenstechniken für die Herstellung von Bauteilen aus Faserverbundwerkstoffen mit Kohlenstoffasern (resin-transver-moulding, Prepregverarbeitung im Preß- oder Autoklavverfahren) ergeben sich für das der Erfindung zugrunde liegende SMC folgende Vorteile:

- Einfache Zuschnittsgeometrien, da trotz UD-Faserverstärkung das SMC fließfähig ist

- Kein SMC-Verschnitt, der entsorgt oder recycelt werden muß

- Kein Beschneiden der Formteile, deshalb kein Abfall

- Kurze Zykluszeiten der Bauteilherstellung, deshalb für die Großserienherstellung geeignet

Bevorzugt für das entwickelte asymetrisch verstärkte SMC sind eine Kombination von Wirrfasern aus Glas- oder Kohlenstoffasern mit UD-Kohlenstoffasern.

Das der Erfindung zugrunde liegende SMC bedeckt die Preßform 60 - 95 %. Um die Fließfähigkeit der UD-Kohlenstoffasern in UD-Richtung zu erzeugen, werden die endlosen UD-Fasern auf eine endliche Länge geschnitten. Die endlichen UD-Faserlängen können zwischen 25 mm und 650 mm liegen. Die Enden der endlichen UD-Fasern liegen versetzt zueinander, um Schwachstellen im SMC zu vermeiden.

In bevorzugter Ausführungsform sind die UD-Faserlagen Kohlenstoffaserkabel, z. B. nach dem "heavy tow"-Verfahren hergestellt. Vorteilhaft werden hierzu "heavy tow" Kohlenstoffasern größer 49 K verwendet. Alternativ können auch Kohlenstoffaserbreitbandkabel nach dem "heavy tow"-Verfahren in den Breiten von 10 mm bis 500 mm verwendet werden.

Zur Kontrolle der UD-Faserrichtungen im fertigen Formteil durch Röntgenuntersuchung sind bevorzugt einzelne Glasfaserfäden in Richtung der UD-Fasern als Kontrastfasern in die Matrix eingebracht.

Zur Verbesserung der Faserbenetzung, der Fließfähigkeit und zum Ausgleich von Schwindungen wird vorteilhafterweise für die Wirrfasern und die UD-Fasern eine unterschiedliche Harzmatrix verwendet.

Es ist vorteilhaft der Harzmatrix leitfähige Zusätze einzubringen, um die elektrische Leitfähigkeit soweit zu verbessern, daß ohne eines zusätzlichen leitfähigen Primers auf dem Bauteil eine elektrostatische (ESTA) Lackierung möglich ist.

Der Oberflächenwiderstand sollte zwischen 10 bis $10^6$ $\Omega$ bei 5 V und der Durchgangswiderstand kleiner als $10^5$ $\Omega$/cm liegen.

Ein erfindungsgemäßes Verfahren zur Herstellung eines faserverstärkten SMC mit den obengenannten Eigenschaften zeichnet sich dadurch aus, daß SMC-Matten mit Wirrfasem und einer einzigen Lage UD-Fasern hergestellt werden und daß mehrere derartige SMC-Matten vor der Weiterverarbeitung zum Formteil durch Schichtung zu einem Stapel mit multiaxialer Ausrichtung der UD-Fasern angeordnet werden. Dies hat den großen Vorteil, daß eine vorhandene Anlage zur Herstellung eines SMC bestehend aus Wirrfasern und UD-Fasem nicht verändert werden muß. Die multiaxiale Ausrichtung kommt durch die Schichtung einzelner SMC-Matten zu einem Stapel zustande, wobei die SMC-Matten zueinander verdreht geschichtet werden.

In bevorzugter Ausführungsform sind alle verwendeten UD-Faserlagen in 0°-Richtung ausgerichtet und es wird eine beliebige Anzahl von Faserlagen verwendet.

In alternativer bevorzugter Ausführungsform sind mindestens vier UD-Faserlagen in folgender Ausrichtung angeordnet:

$$0°, 90°, 90°, 0° \text{ oder } 0°, 90°, 0°, 90°.$$

Die Winkelangaben bedeuten, daß die nächste darunterliegende UD-Faserlage um diesen Winkel verdreht zur ersten Lage angeordnet ist.

Dies bedeutet, daß die erste Lage in 0° und die zweite Lage in 90° zur ersten Lage ausgerichtet ist.

In alternativer bevorzugter Ausführungsform sind mindestens sechs UD-Faserlagen angeordnet. Dabei haben die UD-Faserlagen zweckmäßigerweise folgende Ausrichtung:

$$0°, 90°; + 45°, - 45°, 90°, 0°.$$

In alternativer Ausführungsform sind acht UD-Faserlagen angeordnet mit folgender Ausrichtung:

$$0°, 90°; + 45°, - 45°, + 45°, - 45°, 90°, 0°.$$

Für größere Wanddicken kann der Materialaufbau aus 4 oder 6 oder 8 Lagen in der angegebenen Reihenfolge mehrfach übereinander gelegt werden.

Als letzter Arbeitsgang wird der Stapel entweder in das Werkzeug (Presse) zur Herstellung des Bauteils eingelegt und das Bauteil gepreßt oder aber als Zwischenstufe zur Fixierung durch Vorpressen vorgeformt, wobei die Presse zum Vorformen eine Negativform des Werkzeuges zum Herstellen des Bauteils ist.

Bevorzugt werden die Streifen auf Spulen mit einem Kerndurchmesser von größer gleich 200 mm und einem Außendurchmesser von größer gleich 500 mm aufgewickelt.

Das erfindungsgemäße SMC und die erfindungsgemäße Verarbeitungstechnologie ist vielseitig einsetzbar. Es dient bevorzugt zur Herstellung von faserverstärkten Bauteilen, insbesondere für die Kraftfahrzeugindustrie.

Je nach Harzmatrix können Bauteile für die verschiedensten Anwendungen hergestellt werden. Innen- und Außenteile miteinander verbunden ergeben hohe Festigkeiten und Steifigkeiten in z. B. Karosserieelementen.

Bei Verwendung einer schwindungsfreien Harzmatrix können Automobilaußenteile mit einer "class A"-Oberfläche hergestellt werden, die wegen ihrer elektrischen Leitfähigkeit wie Blechteile elektrostatisch lackiert werden können.

Weitere Merkmale der Erfindung ergeben sich aus den Figuren, die nachfolgend beschrieben sind.

Es zeigen:

Fig. 1    schematisch eine Anlage zum Herstellen von SMC mit einer UD-Faserlage,

Fig. 2    schematisch eine Vorrichtung zum Herstellen der Zuschnittslagen und des multiaxialen SMC,

Fig. 3    schematisch das Herstellen der Zuschnittslagen und das Schichten zu einem Stapel auf einem Drehteller,

Fig. 4    das Pressen zu einem Formteil,

Fig. 5    beispielhaft ein geschichteter Stapel einzelner UD-Faserlagen,

Fig. 6    ein fertiges Formteil mit schematischer Anordnung der ursprünglichen UD-Faserlagen und

Fig. 7    die multiaxiale Ausrichtung der UD-Faserlagen.

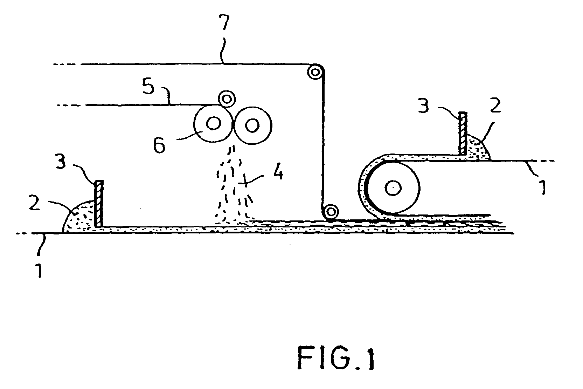

Fig. 1 zeigt eine Maschine oder Anlage zum Herstellen von SMC mit einer einzigen UD-Faserlage. Auf eine Folie 1 wird eine Harzpaste oder Harzmatrix 2 über einen Rakel 3 aufgebracht. Anschließend werden Wirrfasern 4 aufgestreut. Diese Wirrfasern 4 sind Glasfasern oder Kohlenstoffasern, die als Endlosfasern 5 einer Schneidvorrichtung 6 zugeführt werden und von dieser in kleine ca. 6 - 50 mm lange Stücke geschnitten werden. Anschließend werden unidirektionale UD-Fasern 7 in Laufrichtung der Bahn aufgelegt. Diese UD-Fasern 7 sind bevorzugt Kohlenstoffasern. Zum Abschluß wird eine zweite Folie 1 wieder mit eine Harzmatrix 2 über ein Rakel 3 beschichtet und auf die erste Folie gelegt, so daß sich eine Art Sandwich ergibt. Nicht gezeigt ist das anschließende Imprägnieren in einer Kammer zwischen Waben oder Waben und Bindern, die in einer Wärmekammer angeordnet sein können. Dies so hergestellte SMC wird erfindungsgemäß online oder offline in Streifen von ca. 4 - 20 cm Breite geschnitten und auf Rollen aufgewickelt.

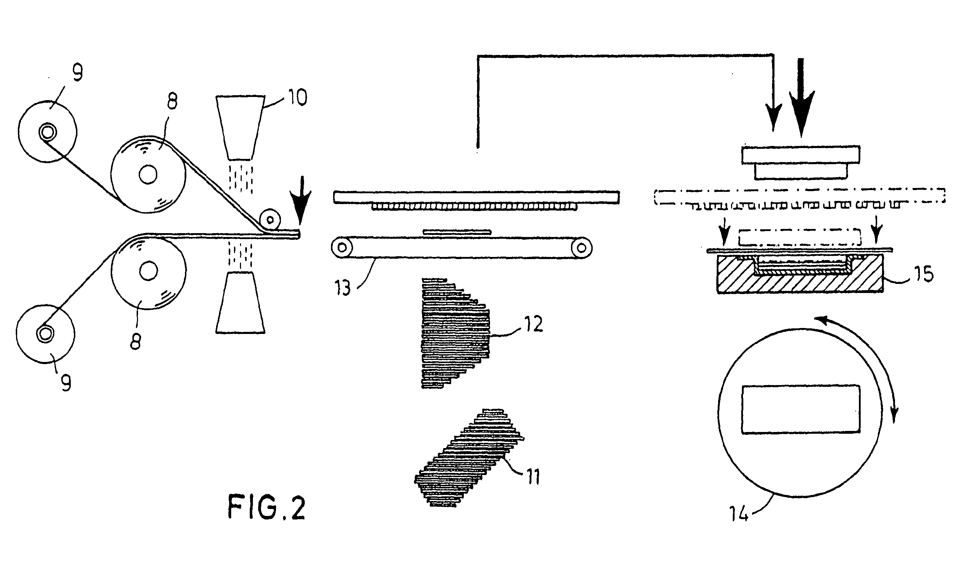

Fig. 2 zeigt schematisch das weitere Vorgehen. Die eben genannten Rollen 8 werden in Reihe versetzt angeordnet. Beispielhaft sind hier nur zwei Rollen 8 gezeichnet. Neben den Rollen 8 ist jeweils ein Folienabzug 9 angeordnet. Zum Herstellen des multiaxialen SMC wird das SMC mit einem Schneidwerkzeug 10 abgelängt und verschoben, so daß sich ohne Verschnitt eine nahezu beliebig geformte Zuschnittslage 11 ergibt. Mit den Bezugzeichen 12 sind die einzelnen Streifen nach dem Schneiden und vor dem Verschieben bezeichnet. Das Verschieben geschieht auf einer Fördervorrichtung 13. Anschließend werden die einzelnen Zuschnittslagen 11 entweder auf einem Drehteller 14 zu einem Stapel geschichtet mit unterschiedlicher axialer Ausrichtung der UD-Fasern oder aber direkt durch Vorpressen fixiert. Die Presse 15 zum Vorformen ist vorteilhaft eine Negativform des Werkzeugs zum Herstellen des Formteils.

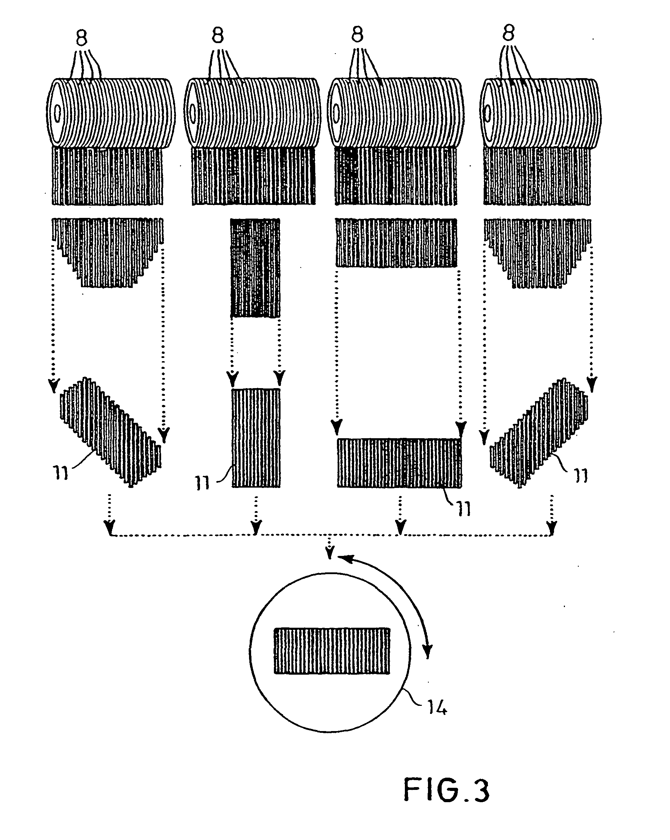

Fig. 3 zeigt schematisch das Herstellen der Zuschnittslagen 11 und das Schichten zu einem Stapel auf einem Drehteller 14. Die einzelnen Rollen 8 werden geschnitten, je nach Erfordernis, und zu einer Zuschnittslage 11 verschoben und anschließend auf einem Drehteller 14 gestapelt. Es fällt dabei kein Abfall bzw. Verschnitt an.

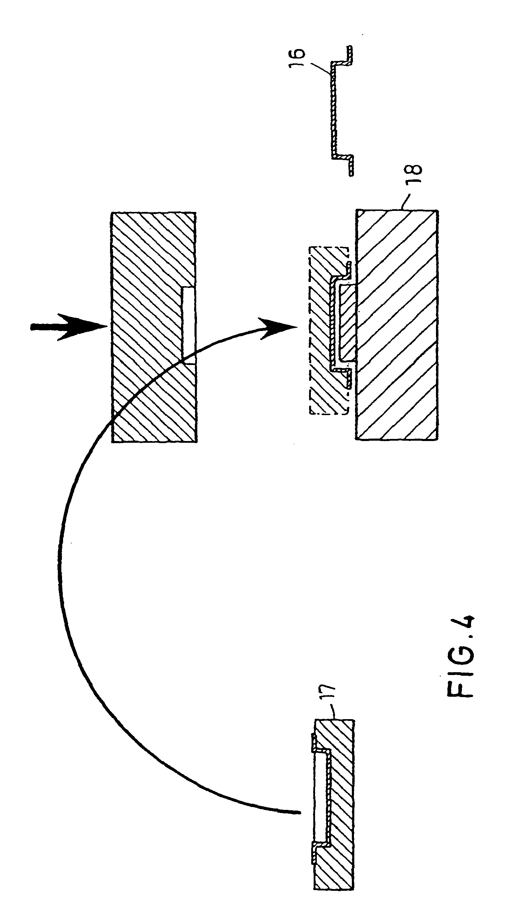

Fig. 4 zeigt das Pressen zu einem Formteil 16. In einer Vorformpresse 17 wurde ein Stapel an geschichteten Zuschnittslagen vorgeformt. Anschließend wird diese Vorformpresse 17 mitsamt dem Vorformteil in die Presse 18 eingelegt, das Vorformteil zurückgefahren und das Formteil 16 gepreßt.

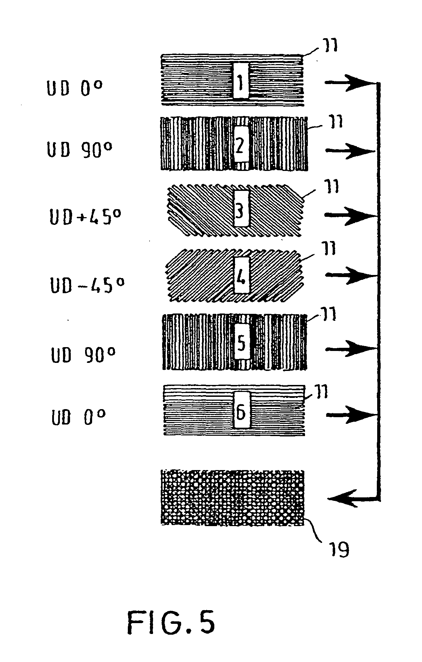

Fig. 5 zeigt beispielhaft einen geschichteten Stapel 19 einzelner Zuschnittslagen 11. Der Stapel 19 besteht in diesem Beispiel aus sechs Lagen mit einer Orientierung der UD-Faserlagen von 0°, 90°, + 45°, - 45°, 90°, 0°.

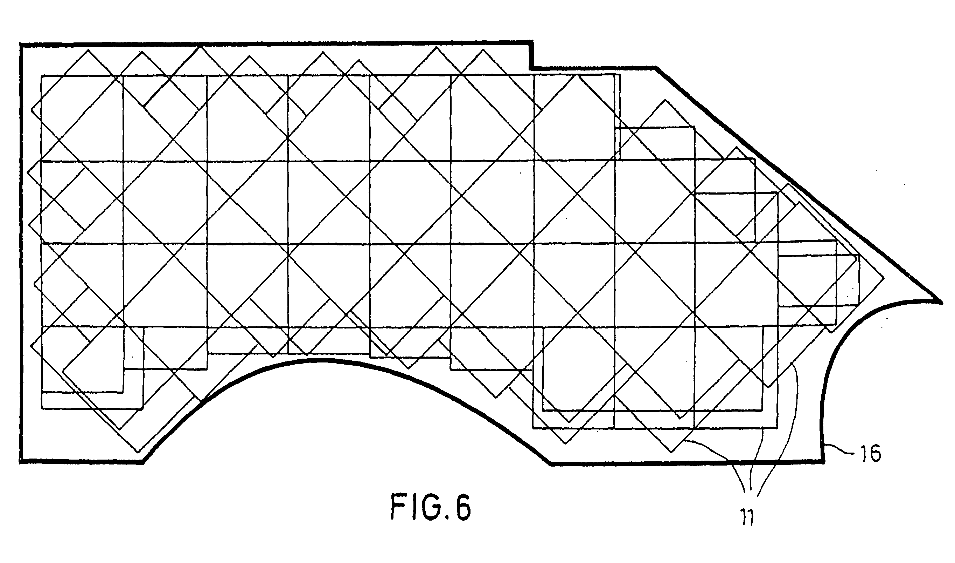

Fig. 6 zeigt eine fertiges Bauteil (Formteil) 16 mit schematischer Anordnung der einzelnen UD-Faserlagen. Gut zu erkennen ist die Schichtung der einzelnen Zuschnittslagen 11.

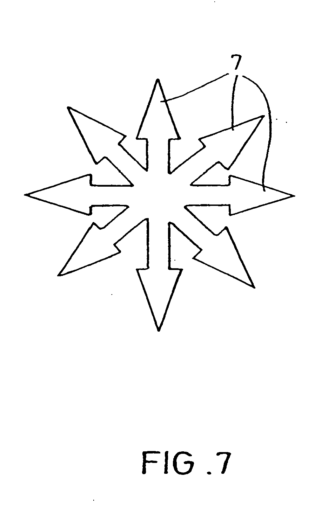

Fig. 7 zeigt die multiaxiale Ausrichtung der UD-Faserlagen in 0°, 90°, + 45°, - 45°, 90°, 0°.

**Patentansprüche**

**1.**  Verfahren zur Herstellung faserverstärkter duroplastischer Bauteile aus faserverstärkten SMC (Sheet Moulding Compound)- Matten, die aus einer Harzmatrix (2) mit einer Faserverstärkung durch unidirektionale Fasern (UD-Fasern) (7), die in einer einzigen axialen Ausrichtung angeordnet sind, und vorteilhafterweise zusätzlich mit geschnittenen Fasern (Wirrfasern) (4), die ungerichtet in der Harzmatrix (2) angeordnet sind, bestehen und die SMC-Matten mit einer einzigen axialen Ausrichtung der UD-Fasern (7) hergestellt werden, wobei

- mehrere dieser SMC-Matten vor der Weiterverarbeitung zum Bauteil (16) durch Schichtung zu einem Stapel (19) mit multiaxialer Ausrichtung der UD-Fasern (7) angeordnet werden,
- dieser Stapel (19) in das Werkzeug (Presse) (18) zur Herstellung des Bauteils (16) eingelegt wird oder aber zur Fixierung durch Vorpressen vorgeformt wird,
- die SMC-Matten in Streifen (12) geschnitten und auf Spulen bzw. Rollen (8) aufgewickelt werden,
- die Streifen (12) abgelängt und in rechteckigen Zuschnittslagen (11) verschoben werden und
- die einzelnen Zuschnittslagen (11) auf einem Drehteller (14) zu einem Stapel (19) geschichtet werden.

**2.** Verfahren nach Anspruch 1, **dadurch gekennzeichnet, dass** mindestens vier UD-Faserlagen (7) angeordnet sind.

**3.** Verfahren nach Anspruch 2, **dadurch gekennzeichnet, dass** die vier UD-Faserlagen (7) folgende Ausrichtung haben

0°, 90°, 90°, 0° oder 0°, 90°, 0°, 90°.

**4.** Verfahren nach Anspruch 1, **dadurch gekennzeichnet, dass** mindestens sechs UD-Faserlagen (7) angeordnet sind.

**5.** Verfahren nach Anspruch 4, **dadurch gekennzeichnet, dass** die sechs UD-Faserlagen (7) folgende Ausrichtung haben

0°, 90°; + 45°, - 45°, 90°, 0°.

**6.** Verfahren nach Anspruch 1, **dadurch gekennzeichnet, dass** acht UD-Faserlagen (7) angeordnet sind.

**7.** Verfahren nach Anspruch 6, **dadurch gekennzeichnet, dass** die acht UD-Faserlagen (7) folgende Ausrichtung haben

0°, 90°; + 45°, - 45°, + 45°, - 45°, 90°, 0°.

**8.** Verfahren nach einem der Ansprüche 1 bis 7, **dadurch gekennzeichnet, dass** die Presse zum Vorformen eine Negativform des Werkzeugs zum Herstellen des Bauteils (16) ist.

**9.** Verfahren nach einem der vorhergehenden Ansprüche, **dadurch gekennzeichnet, dass** die Streifen (12) auf Spulen mit einem Kerndurchmesser von größer 200 mm und einem Außendurchmesser von größer 500 mm aufgewickelt werden.

**10.** Verfahren nach einem der vorhergehenden Ansprüche, **dadurch gekennzeichnet, dass** das SMC fließfähig ist und die Zuschnittsgröße immer kleiner als die abgewickelte Bauteiloberfläche ist.

**Claims**

**1.** A process for producing fibre-reinforced thermosetting components from fibre-reinforced SMC (Sheet Moulding Compound) mats, which comprise a resin matrix (2) which is fibre-reinforced by unidirectional fibres (UD fibres) (7) arranged in a single axial alignment and advantageously with additional cut fibres (random fibres) (4) arranged in non-aligned manner in the resin matrix (2) and the SMC mats are produced with a single axial alignment of the UD fibres (7), in which process

- a plurality of these SMC mats are arranged, prior to further processing to form the component (16), by building up into a stack (19), with multi-axial alignment of the UD fibres (7),
- this stack (19) is placed into the mould (press) (18) for producing the component (16) or else is preshaped by prepressing for the purpose of fixation,
- the SMC mats are cut into strips (12) and wound onto spools or reels (8),
- the strips (12) are cut to length and displaced in rectangular blank layers (11) and
- the individual blank layers (11) are built up into a stack (19) on a rotary table (14).

**2.** A process according to Claim 1, **characterised in that** at least four UD fibre layers (7) are arranged.

**3.** A process according to Claim 2, **characterised in that** the four UD fibre layers (7) have the following alignment

$$0°, \ 90°, \ 90°, \ 0° \ \text{or} \ 0°, \ 90°, \ 0°, \ 90°.$$

**4.** A process according to Claim 1, **characterised in that** at least six UD fibre layers (7) are arranged.

**5.** A process according to Claim 4, **characterised in that** the six UD fibre layers (7) have the following alignment

$$0°, \ 90°; \ +45°, \ -45°, \ 90°, \ 0°.$$

**6.** A process according to Claim 1, **characterised in that** eight UD fibre layers (7) are arranged.

**7.** A process according to Claim 6, **characterised in that** the eight UD fibre layers (7) have the following alignment

$$0°, \ 90°; \ +45°, \ -45°, \ +45°, \ -45°, \ 90°, \ 0°.$$

**8.** A process according to one of Claims 1 to 7, **characterised in that** the press for preshaping is an inverse form of the mould for producing the component (16).

**9.** A process according to one of the preceding claims, **characterised in that** the strips (12) are wound onto spools with a core diameter of greater than 200 mm and an outside diameter of greater than 500 mm.

**10.** A process according to one of the preceding claims, **characterised in that** the SMC is capable of flow and the blank size is always smaller than the laid-out component surface.

**Revendications**

**1.** Procédé de fabrication de pièces en matière plastique thermodurcissable renforcée de fibres, à partir de mats de préimprégnés SMC ("Sheet Moulding Compound") qui sont constitués d'une matrice (2) de résine renforcée par des fibres unidirectionnelles (7) ("fibres UD"), disposées dans une direction axiale unique, et qui comportent en outre, avantageusement, des fibres coupées (4) (fibres en désordre), disposées sans direction privilégiée au sein de la matrice (2) de résine, lesquels mats de préimprégnés SMC sont préparés avec des fibres UD (7) qui ont toutes leur axe orienté dans la même direction,
dans lequel procédé :

- on dispose en couches plusieurs de ces mats de préimprégnés SMC, avant d'effectuer les opérations ultérieures donnant une pièce (16), pour en faire une pile (19) où les axes des fibres UD (7) sont orientés dans plusieurs directions,
- et l'on place cette pile (19) dans l'outil (presse) (18) servant à fabriquer la pièce (16), ou bien, pour la consolider, on la presse pour effectuer un préformage,

et dans lequel procédé

- on coupe les mats de préimprégnés SMC en bandes (12) qu'on enroule sur des bobines ou des rouleaux (8),
- on coupe les bandes (12) à la longueur pour en faire des morceaux coupés (11) rectangulaires,
- et l'on dispose en couches ces morceaux coupés (11), un par un, sur une plaque tournante (14) pour en faire une pile (19).

2. Procédé conforme à la revendication 1, **caractérisé en ce que** l'on empile au moins quatre couches de fibres UD (7).

3. Procédé conforme à la revendication 2, **caractérisé en ce que** les quatre couches de fibres UD (7) ont les orientations suivantes : 0°, 90°, 90° et 0°, ou bien 0°, 90°, 0° et 90°.

4. Procédé conforme à la revendication 1, **caractérisé en ce que** l'on empile au moins six couches de fibres UD (7).

5. Procédé conforme à la revendication 4, **caractérisé en ce que** les six couches de fibres UD (7) ont les orientations suivantes : 0°, 90°, +45°, -45°, 90° et 0°.

6. Procédé conforme à la revendication 1, **caractérisé en ce que** l'on empile au moins huit couches de fibres UD (7).

7. Procédé conforme à la revendication 6, **caractérisé en ce que** les huit couches de fibres UD (7) ont les orientations suivantes : 0°, 90°, +45°, -45°, +45°, -45°, 90° et 0°.

8. Procédé conforme à l'une des revendications 1 à 7, **caractérisé en ce que** la presse servant au préformage est un moule en négatif de l'outil servant à fabriquer la pièce (16).

9. Procédé conforme à l'une des revendications précédentes, **caractérisé en ce que** les bandes (12) sont enroulées sur des bobines dont le noyau a plus de 200 mm de diamètre et dont le diamètre extérieur est supérieur à 500 mm.

10. Procédé conforme à l'une des revendications précédentes, **caractérisé en ce que** le préimprégné SMC peut couler et que la taille des morceaux coupés est toujours plus petite que la surface développée de la pièce.

FIG.1

FIG.2

FIG.3

FIG.4

UD 0°

UD 90°

UD +45°

UD -45°

UD 90°

UD 0°

# FIG.5

EP 1 242 231 B1

FIG.6

FIG .7